# EUROPEAN PATENT APPLICATION

(11) **EP 4 832 141 A1**
(43) Date of publication of application: **28.10.2026**
(21) Application number: 25877691.3
(22) Date of filing: 22.09.2025
(51) Int. Cl.: H01M 10/42, H01M 4/505, H01M 4/131, H01M 10/052, H01M 4/02

(54) **METHOD FOR PREDICTING PERFORMANCE OF SECONDARY BATTERY FROM CATHODE ACTIVE MATERIAL, CATHODE ACTIVE MATERIAL, CATHODE, AND SECONDARY BATTERY**

(30) Priority: 07.10.2024 KR 20240135855; 15.09.2025 KR 20250131694
(71) Applicant: LG Energy Solution, Ltd., Seoul 07335 (KR)
(72) Inventor: KIM, Minjeong, Daejeon 34122 (KR); HAN, Gi Beom, Daejeon 34122 (KR); LEE, Youshin, Daejeon 34122 (KR); LEE, Jeayoung, Daejeon 34122 (KR); PARK, Hyunyoung, Daejeon 34122 (KR); PARK, Sin Young, Daejeon 34122 (KR)
(74) Representative: Hoffmann Eitle
(86) International application number: PCT/KR2025/014757
(87) International publication number: WO 2026/079719

(57) **Abstract**

The present invention relates to a method for predicting performance of a secondary battery, the method comprising the steps of: manufacturing a cathode comprising a cathode active material comprising an overlithiated manganese-rich oxide containing 50 mol% or more but less than 100 mol% of manganese on the basis of the total metal content excluding lithium; preparing a cathode sample by milling the cathode; obtaining a cross-sectional image by photographing the cathode sample and a cross-section with a scanning electron microscope; selecting a cathode active material particle region from the cross-sectional image, followed by measuring an average pore area ratio according to an ECD value range of the cross-section of the selected cathode active material particle; and predicting performance of a secondary battery comprising the cathode from the average pore area ratio according to the ECD value range of the cross-section of the cathode active material particle, wherein the ECD represents the diameter of a circle having the same area as the cross-sectional area of the particle, and the pore area ratio represents an area ratio of pores to the cross-sectional area of the cathode active material particle.

## Description

### TECHNICAL FIELD

### Cross Citation with Related Application(s)

This application claims priority to and the benefit of Korean Patent Application No. 10-2024-0135855, filed on October 7, 2024, and Korean Patent Application No. 10-2025-0131694, filed on September 15, 2025, the disclosures of which are incorporated herein by reference in their entirety.

The present disclosure relates to a method for predicting the performance of a secondary battery from a positive electrode active material, a positive electrode active material having excellent battery capacity and resistance performance, a positive electrode and secondary battery comprising the same.

### BACKGROUND

Recently, with the increase of the technological development and demand for mobile devices such as portable computers, portable phones, and cameras, demand for secondary batteries as an energy source rapidly increases.

The lithium secondary battery generally consists of a positive electrode, a negative electrode, a separator and an electrolyte. In this case, the electrochemical performance of the secondary battery is affected by the aforementioned components, and among them, the influence on the positive electrode active material contained in the positive electrode is significant.

Specifically, it is known that pores exist inside the positive electrode active material particles, and the area, quantity, and distribution of the pores have a significant effect on the electrochemical performance of the secondary battery.

In this regard, research is being conducted to confirm the correlation between the pores contained inside the positive electrode active material and battery performance factors such as battery capacity and resistance. For example, the porosity is analyzed through SEM images of the positive electrodes subjected to a cross-section processing, but this method is problematic in that because the porosities on the surface and the inside of the active material are mixed and appear as a single value depending on the processed position, the reliability of the result value decreases, and large deviations occur.

In order to address these issues, a method has been discussed in which only positive electrode active material particles with a particle diameter close to D₅₀ are selected (D₅₀ filtering) from an SEM photograph to analyze the porosity, thereby obtaining result values with high reliability and low deviation. However, this method has a high possibility of not representing the overall characteristics of the material as the population parameter of particles being analyzed is limited.

Therefore, there is a need to develop a technology that accurately analyzes such correlations and predicts the electrochemical performance of secondary batteries capable of representing the overall characteristics of the materials while having high reliability.

### DETAILED DESCRIPTION OF THE INVENTION[

### Technical Problem

It is an object of the present disclosure to provide a method for predicting a secondary battery performance by analyzing the pore area ratio according to the range of ECD (equilibrium circle diameter) values of the cross-section of the positive electrode active material particles through cross-sectional images of the positive electrode captured with an electron microscope.

It is another object of the present disclosure to provide a positive electrode active material having optimal conditions confirmed in the process of deriving the prediction method, and a positive electrode and secondary battery comprising the same.

### Technical Solution

According to an aspect of the present disclosure, provided is a method for predicting a secondary battery performance, comprising the steps of:
a) fabricating a positive electrode comprising a positive electrode active material comprising a lithium- and manganese-rich oxide in which a manganese content is 50 mol% or more and less than 100 mol% based on the total content of metals excluding lithium;
b) milling the positive electrode to prepare a positive electrode sample;
c) photographing the cross section of the positive electrode sample by a scanning electron microscope (SEM) to acquire a cross-sectional image;
d) selecting a positive electrode active material particle region from the cross-sectional image and then measuring the average pore area ratio according to the range of ECD (equilibrium circle diameter) values of the cross section of the selected positive electrode active material particle; and
e) predicting the performance of a secondary battery comprising the positive electrode from the average pore area ratio according to the range of ECD (equilibrium circle diameter) values of the cross section of the positive electrode active material particle,

wherein the ECD (equilibrium circle diameter) represents the diameter of a circle having the same area as the cross-sectional area of the particle, and
wherein the pore area ratio represents the ratio of the pore area to the cross-sectional area of the positive electrode active material particle.

According to another aspect of the present disclosure, provided is a positive electrode active material comprising a lithium- and manganese-rich oxide in which a manganese content is 50 mol% or more and less than 100 mol% based on the total content of metals excluding lithium,
wherein when analyzing the cross section of the positive electrode active material, the average pore area ratio of particle cross sections with an ECD (equilibrium circle diameter) value of more than 2 µm and 4 µm or less is 0.02 or more, and
wherein the ECD (equilibrium circle diameter) represents the diameter of a circle having the same area as the cross-sectional area of the particle.

According to another aspect of the present disclosure, provided is a positive electrode comprising the aforementioned positive electrode active material.

According to yet another aspect of the present disclosure, provided is a secondary battery comprising the aforementioned positive electrode.

### Advantageous Effects

The present disclosure relates to a method for predicting the performance of a secondary battery from a positive electrode active material, and can utilize the average pore area ratio according to the ECD value range of a positive electrode active material particle selected from SEM cross-sectional images, thereby obtaining a secondary battery performance prediction result having high reliability.

Furthermore, the secondary batteries having excellent battery capacity and resistance performance can be fabricated using positive electrode active materials with optimal conditions confirmed in the process of deriving the above prediction method.

### BRIEF DESCRIPTION OF THE DRAWINGS

Figure 1 shows cross-sectional images captured in Experimental Example of the present disclosure and SEM images of selected positive electrode active material particle regions from the cross-sectional images.
Figure 2 is a graph showing the ECD values and pore area ratio (PAR) of particle cross sections calculated in Experimental Example of the present disclosure.
Figure 3 is a graph showing evaluation of the resistance characteristics of a lithium secondary battery according to Experimental Example of the present disclosure.
Figure 4 is a graph showing evaluation of the discharge capacity of a lithium secondary battery according to Experimental Example of the present disclosure.

### DETAILED DESCRIPTION OF THE EMBODIMENTS

Hereinafter, specific embodiments of the present disclosure will be described in more detail for promoting an understanding of the invention.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terminology used herein is merely used for the purpose of describing particular embodiments, and is not intended to be limiting of the present disclosure. The singular forms are intended to include the plural forms as well, unless the context clearly indicates otherwise.

It should be understood that the terms "comprises," "comprising," "includes," "including," "has," or "having," when used herein, specify the presence of stated features, integers, steps, components or combinations thereof, but do not preclude the presence or addition of one or more other features, integers, steps, components or combinations thereof.

As used herein, the term "secondary particle" refers to a particle formed by aggregation of several tens to several hundreds of primary particles. More specifically, a secondary particle is an aggregate of 40 primary particles or more.

As used herein, the term "particle" may include any one or all of a single particle, a pseudo-single particle, a primary particle, a nodule, and a secondary particle.

As used herein, the term "D₅₀" refers to a particle size corresponding to 50% of a volume cumulative particle size distribution. The D₅₀ may be measured by using a laser diffraction method. For example, the measurement may be performed by a process which includes dispersing a positive electrode active material powder in a dispersion medium, introducing it into a commercially available laser diffraction particle size measurement device (e.g., Microtrac MT 3000), irradiating it with an ultrasonic wave of about 28 kHz with the output power of 60W to obtain a volume cumulative particle size distribution graph, and determining the particle size corresponding to 50% of cumulative volume.

As used herein, the term "pore area ratio (PAR)" is determined by obtaining a cross-sectional image of a positive electrode sample using a scanning electron microscope (SEM), selecting a positive electrode active material particle region from the obtained cross-sectional image, and then measuring the ratio of the pore area to the cross-sectional area of the selected particle (pore area/particle cross-sectional area).

As used herein, the term "ECD (equilibrium circle diameter)" refers to the diameter value of a circle having the same area as the cross-sectional area of a selected particle.

Below, specific embodiments of the present disclosure will be described in detail.

### Method for Predicting Secondary Battery Performance

The inventors of the present application have studied the correlation between pores in a positive electrode active material and battery performance, analyzed the cross-sectional area and pore area of the positive electrode active material particle acquired through a scanning electron microscope (SEM), and confirmed that the performance of a secondary battery can be predicted from the ratio of a pore area according to the range of ECD (equilibrium circle diameter) values (pore area/particle cross-sectional area). The prediction method of the present disclosure is derived by dividing and analyzing the distribution position of pores existing inside the positive electrode active material particle according to the range of ECD (equilibrium circle diameter) values, and is more reliable than existing analytical methods that represents as a single value without considering the distribution position of pores. Further, since D₅₀ filtering is not carried out, the population parameters of the analyzed particles are not limited, thus making it possible to obtain results that can represent the whole of the positive electrode active material group used in the analysis.

The method for predicting a secondary battery performance according to the present disclosure comprises the steps of:
a) fabricating a positive electrode comprising a positive electrode active material comprising a lithium- and manganese-rich oxide in which a manganese content is 50 mol% or more and less than 100 mol% based on the total content of metals excluding lithium;
b) milling the positive electrode to prepare a positive electrode sample;
c) photographing the cross section of the positive electrode sample by a scanning electron microscope (SEM) to acquire a cross-sectional image;
d) selecting a positive electrode active material particle region from the cross-sectional image and then measuring the average pore area ratio according to the range of ECD (equilibrium circle diameter) values of the cross section of the selected positive electrode active material particle; and
e) predicting the performance of a secondary battery comprising the positive electrode from the average pore area ratio according to the range of ECD (equilibrium circle diameter) values of the cross section of the positive electrode active material particle,

wherein the ECD (equilibrium circle diameter) represents the diameter of a circle having the same area as the cross-sectional area of the particle, and
wherein the pore area ratio represents the ratio of the pore area to the cross-sectional area of the positive electrode active material particle.

The method for predicting the performance of a secondary battery of the present disclosure is described in detail below.

### a) Step of fabricating positive electrode

First, a positive electrode active material and, optionally, at least one of a binder, a conductive material and a dispersant are dispersed in a dispersion medium to obtain a slurry, and the resulting slurry is applied to at least one surface of a positive electrode current collector and dried to form a positive electrode active material layer, thereby fabricating a positive electrode. Specific details of the positive electrode current collector, positive electrode active material, binder, conductive material, dispersant, and dispersion medium used in the fabrication of a positive electrode are described below.

### b) Step of preparing positive electrode sample

The positive electrode fabricated above is milled using an ion milling device (e.g., Hitachi IM5000) to prepare a positive electrode sample for cross-sectional analysis.

### c) Step of acquiring a cross-sectional image of the positive electrode

The cross section of the milled positive electrode sample is photographed using a scanning electron microscope (SEM) to obtain a cross-sectional image. The obtained cross-sectional image shows a cross section of the positive electrode sample cut in the thickness direction.

### d) Step of measuring the average pore area ratio according to the range of ECD (equilibrium circle diameter) values of the cross section of the positive electrode active material particle

The cross-sectional image photographed in step c) is digitized and the positive electrode active material particle area is selected, and the positive electrode active material particle region is selected and analyzed pixel-by-pixel (image processing) to thereby measure the average pore area ratio according to the range of ECD (equilibrium circle diameter) values of the cross section of the positive electrode active material particle. The pixel is the smallest unit of a digital image and represents an actual area, and each pixel represents the same area.

The digitized cross-sectional image is subjected to a scale correction based on the resolution of the SEM to convert the number of pixels into an actual area. The pore area ratio is then calculated by dividing the total area of pixels recognized as pores into the area of all pixels (particle area). At this time, each pixel of the pores can be binarized, allowing it to be classified as black (pore) or white (particle) with a value of 0 or 1.

Such a measurement process may be performed using software or program code capable of image processing and analysis. In an embodiment, the process can be performed using Python programming.

Further, the ECD (equilibrium circle diameter) value of each particle may be calculated from the area of the particle calculated above, and based on this, the average pore area ratio may be calculated according to the range of ECD (equilibrium circle diameter) values of the cross section of the positive electrode active material particle.

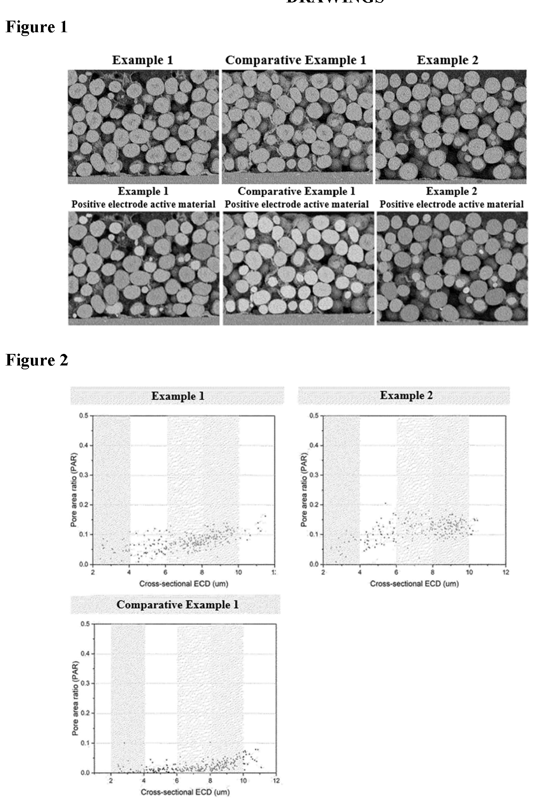

Figure 1 shows a cross-sectional image obtained in an experimental example of the present disclosure, which will be described later, and an SEM image of a positive electrode active material particle region selected from the cross-sectional image. Referring to the image in Figure 1, the circular gray region represents the positive electrode active material, the black region located within the gray region represents the portion on which the pore is located, and the outer area of the positive electrode active material is the portion corresponding to the binder, conductive material and dispersant. The area shown in red in Figure 1 indicates the selected positive electrode active material particle region.

The positive electrode active material particle region refers to a cross section of the positive electrode active material particles existing in the positive electrode active material layer selected in the cross-sectional image, and the cross section of the positive electrode active material particle refers to a cross section of the positive electrode active material particle cut along the thickness direction. The size of the cross-section of a positive electrode active material particle shown in the captured cross-sectional image varies depending on the position where the particle is processed. Specifically, when the processed position passes through the center of the particle, the cross-sectional size is the largest, and as the position gets closer to the edge of the particle, the cross-sectional size becomes smaller. Within the range of ECD (equilibrium circle diameter) values to be described below, it can be interpreted that, in the order of more than 8 µm and 10 µm or less, more than 6 µm and 8 µm or less, and more than 2 µm and 4 µm or less, the cross-sectional processing position get closer to the edge of the particle.

Figure 2 is a graph showing the ECD values and pore area ratio (PAR) of particle cross sections calculated using the aforementioned method in Experimental Example of the present disclosure, which will be described later.

Since the positive electrode active material particle is not perfectly spherical, a cross section cut along the thickness direction does not exhibit the shape of a perfect circle, making it difficult to determine the diameter of the particle cross section. For this reason, in the present disclosure, the cross-sectional area of the selected positive electrode active material particle is measured, and converted into an ECD (equilibrium circle diameter) value, which indicates the diameter of a circle with the same area.

As described above, the ECD (equilibrium circle diameter) values obtained above are divided into ranges, and the average pore area ratio of the cross section of the positive electrode active material particles corresponding to each range is calculated. Even in this case, the calculation is performed using the program used for the image processing described above. The average pore area ratio according to the range of the ECD (equilibrium circle diameter) values of the cross section of the positive electrode active material particle is used to predict the capacity and resistance performance of a secondary battery.

According to an embodiment of the present disclosure, the step d) comprises measuring the average pore area ratio of particle cross sections where the ECD (equilibrium circle diameter) value of the cross section of the positive electrode active material particle is more than 2 µm and 4 µm or less.

According to an embodiment of the present disclosure, the step d) may further comprise one or more steps of: measuring the average pore area ratio of particle cross sections where the ECD (equilibrium circle diameter) value of the cross section of the positive electrode active material particle is more than 6 µm and 8 µm or less, and measuring the average pore area ratio of particle cross sections where the ECD (equilibrium circle diameter) value of the cross section of the positive electrode active material particle is more than 8 µm and 10 µm or less.

### e) Step of predicting the performance of a secondary battery

The present inventors have fabricated a secondary battery comprising the positive electrode fabricated in Experimental Example described below, measured the capacity and resistance performance of the battery, analyzed the measured results and the average pore area ratio according to the range of the ECD (equilibrium circle diameter) values of the cross section of the positive electrode active material particle obtained in step d) to confirm a correlation, enabling prediction of the performance of the secondary battery therefrom.

Specifically, according to an embodiment of the present disclosure, when the average pore area ratio of particle cross sections where the ECD (equilibrium circle diameter) value of the cross section of the positive electrode active material particle is more than 2 µm and 4 µm or less is 0.02 or more, it may be predicted to have excellent battery capacity and resistance performance. Since the electrochemical reactions occur on the surface of particles, they are more significantly affected by the capacity of pores distributed on the outside of the particles than in the center. Therefore, when the average pore area ratio of particle cross sections where the ECD (equilibrium circle diameter) value of the cross section of the positive electrode active material particle is more than 2 µm and 4 µm or less satisfies the above range, the electrochemical reaction occurs rapidly, enabling fabrication of a battery with excellent capacity and resistance performance.

According to another embodiment of the present disclosure, when the average pore area ratio of particle cross sections where the ECD (equilibrium circle diameter) value of the cross section of the positive electrode active material particle is more than 6 µm and 8 µm or less is 0.03 or more, it may be predicted to have excellent battery capacity and resistance performance.

According to another embodiment of the present disclosure, when the average pore area ratio of particle cross sections where the ECD (equilibrium circle diameter) value of the cross section of the positive electrode active material particle is more than 8 µm and 10 µm or less is 0.04 or more, it may be predicted to have excellent battery capacity and resistance performance.

### Positive Electrode Active Material

In the process of deriving a method for predicting a secondary battery performance, a positive electrode active material with excellent battery performance was confirmed.

A positive electrode active material according to an embodiment of the present disclosure is a positive electrode active material comprising a lithium- and manganese-rich oxide in which a manganese content is 50 mol% or more and less than 100 mol% based on the total content of metals excluding lithium, wherein when analyzing the cross section of the positive electrode active material, the average pore area ratio of particle cross sections with an ECD (equilibrium circle diameter) value of more than 2 µm and 4 µm or less is 0.02 or more, preferably 0.03 or more, and more preferably 0.05 or more, and wherein the ECD (equilibrium circle diameter) represents the diameter of a circle having the same area as the cross-sectional area of the particle. When the average pore area ratio of particle cross sections with an ECD value of more than 2 µm and 4 µm or less satisfies the above range, the electrochemical reaction occurs rapidly, enabling fabrication of a battery with excellent capacity and resistance performance.

The cross-sectional analysis of the positive electrode active material is performed through steps a) to d).

According to another embodiment, when analyzing the cross section of the positive electrode active material, the average pore area ratio of particle cross sections with an ECD (equilibrium circle diameter) value of more than 6µm and 8µm or less may be 0.03 or more, preferably 0.05 or more, and more preferably 0.07 or more.

According to another embodiment, when analyzing the cross section of the positive electrode active material, the average pore area ratio of particle cross sections with an ECD (equilibrium circle diameter) value of more than 8µm and 10µm or less may be 0.04 or more, preferably 0.07 or more, and more preferably 0.10 or more.

In an embodiment of the present disclosure, the positive electrode active material comprises the lithium- and manganese-rich oxide. The lithium- and manganese-rich oxide has a structure in which a lithium metal oxide with a layered structure and a lithium manganese oxide (Li₂MnO₃) with a rock salt structure are mixed. Thus, during the activation process and/or charge-discharge cycles, the lithium manganese oxide is further activated, thereby enabling the manganese redox reaction to contribute to realizing a capacity.

In a specific embodiment, the lithium- and manganese-rich oxide may be represented by the following Formula 1.

[Formula 1] Liₐ[Mn_{1-b-c}Ni_{b}M_{c}]₂₋ₐO₂

wherein in Formula 1,
M is at least one selected from the group consisting of Co, Fe, Cr, V, Cu, Zn, Ti, Al, Mg, B, W, Ga, In, Ru, Nb, Sn, Sr and Zr, and
a, b, and c are atomic fractions of each independent elements, wherein 1<a, 0≤b≤0.5, 0≤c≤0.5, and 0<b+c≤0.5.

Specifically, the a is a molar ratio of Li in the lithium- and manganese-rich oxide, which may be 1<a, 1.1≤a≤1.5, or 1.1≤a≤1.3. When the a satisfies the above range, high capacity can be achieved.

The b is a molar ratio of Ni in the lithium- and manganese-rich oxide, which may be 0≤b≤0.5, 0.1≤b≤0.4, or 0.2≤b≤0.4.

The c is a molar ratio of a doping element M in the lithium- and manganese-rich oxide, which may be 0≤c≤0.5, 0≤c≤0.3, or 0≤c≤0.1. The doping element M may be, for example, Co, and if the content of the doping element is too high, it may not only adversely affect the capacity of the active material, but also evolution of gas and deterioration of the positive electrode active material become intensified due to an increase in oxygen oxidation/reduction reactions, which may result in a decrease in lifetime characteristics.

The 1-b-c is a molar ratio of Mn in the lithium- and manganese-rich oxide, which may be 0.5≤1-b-c<1, 0.5≤1-b-c≤0.8, or 0.5≤1-b-c≤0.7. When the 1-b-c is less than 0.5, that is, when b+c is more than 0.5, the proportion of the rock-salt phase becomes too small, so the effects of negative electrode irreversibility compensation and capacity improvement are slight.

On the other hand, in the lithium- and manganese-rich oxide represented by Formula 1, the ratio of the number of moles of Li to the number of moles of all metal elements excluding Li (Li/Me) may be 1.2 to 1.5, or 1.25 to 1.5, or 1.30 to 1.45. When the Li/Me ratio satisfies the above range, rate characteristics and capacity characteristics can excellently exhibit. If the Li/Me ratio is too high, electrical conductivity may decrease and the rock-salt phase (Li₂MnO₃) may increase, which may increase the degradation rate. If the Li/Me ratio is too low, the effect of improving energy density is slight.

On the other hand, the composition of the lithium- and manganese-rich oxide may be represented by the following Formula 2.

[Formula 2] X*Li₂MnO₃ · (1-X)*Li[Ni_{1-y-z}Mn_{y}M_{z}]O₂

wherein in Formula 2,
M may be at least one selected from the group consisting of Co, Fe, Cr, V, Cu, Zn, Ti, Al, Mg, B, W, Ga, In, Ru, Nb, Sn, Sr and Zr, and
0.2≤X≤0.5, 0.4≤y<1, and 0≤z≤0.5.

The X refers to the ratio of the Li₂MnO₃ phase (rock salt structure compound phase) in the lithium- and manganese-rich oxide, and may be 0.2≤X≤0.5, 0.25≤X≤0.5, or 0.25≤X≤0.4. When the ratio of the Li₂MnO₃ phase in the lithium- and manganese-rich oxide satisfies the above range, high capacity characteristics can be realized.

The y is the molar ratio of Mn in the LiM'O₂ phase (M'= [Ni_{1-y-z}Mn_{y}M_{z}]; layered structure compound phase), and may be 0.4≤y<1, 0.4≤y≤0.8, or 0.4≤y≤0.7.

The z is the molar ratio of the doping element M in the LiM'O₂ phase (M'= [Ni_{1-y-z}Mn_{y}M_{z}]; layered structure compound phase), and may be 0≤z≤0.5, 0≤z≤0.3, or 0≤z≤ 0.1.

According to an embodiment of the present disclosure, the positive electrode active material may be in the form of secondary particles formed by aggregation of a plurality of primary particles. The average particle diameter (D₅₀) of the secondary particles may be 6 to 10 µm, preferably 8 to 10 µm.

Meanwhile, the size of the primary particles may be 100 to 300 nm, preferably 100 to 250 nm, and more preferably 100 to 200 nm.

Meanwhile, the lithium- and manganese-rich oxide can be prepared by mixing a transition metal precursor and a lithium source material and then firing them. However, this preparation method may follow the typical preparation process and conditions for a lithium- and manganese-rich oxide, which are previously known. At this time, in order to prepare a lithium- and manganese-rich oxide that satisfies the average pore area ratio of particle cross sections according to the ECD value range, it can be obtained by adjusting factors such as the concentration of the base contained in the mixture for synthesizing the precursor for the lithium- and manganese-rich oxide, synthesis time, stirring speed and temperature, and firing temperature.

The mixture for the precursor synthesis includes a metal solution, a complexing agent such as ammonium ions, and a base such as NaOH. In this case, the initial base concentration during synthesis and changes in the base concentration over time can affect the distribution of pores within the particles. In order to prepare the lithium- and manganese-rich oxide of the present disclosure, the initial base concentration during synthesis may be adjusted to a pH of 10 or more and less than 12, specifically 11 or more and less than 12, or more specifically 11 or more and 11.5 or less. Further, by adjusting the base concentration according to the synthesis time, it is possible to adjust the distribution position of pores within the particles. For example, when the base concentration decreases as the synthesis time flows, it is possible to synthesize particles in which pores are more densely distributed at the edge than at the center.

Further, the firing temperature may be in the range of 800°C to 1,000°C, specifically 800°C to 950°C. Since a higher firing temperature induces the growth of primary particles to form dense positive electrode active material particles, the firing temperature can be adjusted within the above range to obtain the lithium- and manganese-rich oxide of the present disclosure.

### Positive Electrode

A positive electrode comprising the aforementioned positive electrode active material will be described. The positive electrode can be fabricated by applying a positive electrode slurry, in which a positive electrode active material is dispersed in a dispersion medium, to a positive electrode current collector, followed by drying.

In addition to the positive electrode active material comprising the lithium- and manganese-rich oxide, the positive electrode slurry may optionally further include a binder, a conductive material, a dispersant, and the like, as necessary.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, fired carbon, or aluminum or stainless steel of which surface is treated with one of carbon, nickel, titanium, silver, or the like may be used as the positive electrode current collector. Also, the positive electrode current collector may typically have a thickness of 3µm to 500µm, and may have fine protrusions and depressions formed on a surface thereof to enhance the adhesion of the positive electrode active material. For example, the positive electrode current collector may be used in various shapes such as a film, a sheet, a foil, a net, a porous body, a foam body, and a non-woven fabric body.

The positive electrode active material may further include conventional positive electrode active materials in addition to the aforementioned lithium- and manganese-rich oxide. For example, the positive electrode active material may further include one or more positive electrode active materials selected from the group consisting of LCO(LiCoO₂), LNO(LiNiO₂), LFP(LiFePO₄) and NCM(Li[NiₚCo_{q}Mnᵣ₁]O₂, 0<p<1, 0<q<1, 0<r1<1, p+q+r1=1). However, the positive electrode active material preferably comprises at least 70% by weight of the lithium- and manganese-rich oxide based on the total weight of the positive electrode active material, and may be composed solely of the lithium- and manganese-rich oxide.

At this time, the positive electrode active material may be included in an amount of 80% by weight to 99% by weight, more specifically 90% by weight to 98% by weight, based on the total weight of the positive electrode active material layer.

The conductive material is used to provide conductivity to the electrode, wherein any conductive material may be used without particular limitation as long as it has electron conductivity without causing any chemical change in the battery. Specific examples of the conductive material may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive material may be included in an amount of 0.01% by weight to 10% by weight, preferably 0.1% by weight to 9% by weight, more preferably 0.1% by weight to 5% by weight, based on the total weight of the positive electrode active material layer.

The binder serves to improve binding between positive electrode active material particles and the adhesion between the positive electrode active material and the current collector. Specific examples of the binder may be polyvinylidene fluoride (PVDF), polyvinylidene fluoride-co-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 1% by weight to 30% by weight, preferably 1% by weight to 20% by weight, and more preferably 1% by weight to 10% by weight based on the total weight of the positive electrode active material layer.

The dispersion medium may be a solvent commonly used in the art, and for example, NMP(N-methyl-2-pyrrolidone), DMF(dimethyl formamide), DMSO(dimethyl sulfoxide), ethanol, isopropanol, water, or a mixture thereof may be used, but are not necessarily limited thereto. The dispersion medium may be included in such an amount that the positive electrode slurry composition has an appropriate viscosity and solids content. Specifically, the dispersion medium may be included in such an amount that the solids content in the slurry is 40% by weight to 75% by weight, and more specifically 40% by weight to 65% by weight.

### Secondary Battery

Next, a secondary battery according to yet another embodiment of the present disclosure will be described. Specifically, a lithium secondary battery, which is a representative example of a secondary battery, includes the aforementioned positive electrode, a negative electrode located opposite to the positive electrode, a separator interposed between the positive electrode and the negative electrode, and an electrolyte.

The negative electrode can be fabricated by applying a negative electrode slurry containing a negative electrode active material dispersed in a dispersion medium onto a negative electrode current collector, followed by drying.

The negative electrode slurry may, in addition to the negative electrode active material, optionally further comprise a binder, a conductive material, a dispersant, and the like, as necessary.

The negative electrode current collector is not particularly limited as long as it has high conductivity without causing a chemical change in the battery, and, for example, copper, stainless steel, aluminum, nickel, titanium, fired carbon, or copper or stainless steel of which surface is treated with carbon, nickel, titanium, silver, or the like, an aluminum-cadmium alloy, or the like may be used. Further, the negative electrode current collector may generally have a thickness of 3µm to 500 µm. Also, similar to the positive electrode current collector, the negative electrode current collector may have fine protrusions and depressions formed on a surface thereof to enhance adherence of a negative electrode active material. For example, the negative electrode current collector may be used in various shapes such as a film, a sheet, a foil, a net, a porous body, a foam body, and a non-woven fabric body.

In an embodiment of the present disclosure, as the negative electrode active material, a compound capable of reversible intercalation and deintercalation of lithium may be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiO_{β} (0<β< 2), SnO₂, vanadium oxide, and lithium vanadium oxide; a composite containing the metallic compound and the carbonaceous material, such as Si-C composite or Sn-C composite, and any one alone or a mixture of two or more thereof may be used.

Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, platelike, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The negative electrode active material may be included in an amount of 80% by weight to 99% by weight, 82% by weight to 99% by weight, or 84% by weight to 99% by weight based on the total weight of the negative electrode active material layer.

The binder is a component that assists in the binding between the conductive material, the active material, and the current collector, wherein the binder is commonly added in an amount of 0.1% by weight to 10% by weight based on the total weight of the negative electrode active material layer. Examples of the binder may include polyvinylidene fluoride (PVDF), polyvinyl alcohol, carboxymethyl cellulose(CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, a styrene-butadiene rubber, a nitrile-butadiene rubber, a fluorine rubber, and various copolymers thereof.

The conductive material is a component for further improving the conductivity of the negative electrode active material, wherein the conductive material may be included in an amount of 1% by weight to 30% by weight, 1% by weight to 20% by weight, or 1% by weight to 10% by weight, based on the total weight of the negative electrode active material layer. Such a conductive material is not particularly limited so long as it has conductivity without causing a chemical change in the battery, and, for example, graphite such as natural graphite or artificial graphite; carbon black such as acetylene black, Ketjen black, channel black, furnace black, lamp black, or thermal black; conductive fibers such as carbon fibers or metal fibers; carbon fluoride; metal powders such as aluminum, and nickel powders; conductive whiskers such as zinc oxide whiskers and potassium titanate whiskers; conductive metal oxide such as titanium oxide; a conductive material such as polyphenylene derivatives, and the like may be used.

The dispersion medium may be a solvent commonly used in the art, and for example, NMP(N-methyl-2-pyrrolidone), DMF(dimethyl formamide), DMSO(dimethyl sulfoxide), ethanol, isopropanol, water, or a mixture thereof may be used, but are not necessarily limited thereto. The dispersion medium may be included in such an amount that the negative electrode slurry composition has an appropriate viscosity and solids content. Specifically, the dispersion medium may be included in such an amount that the solids content in the slurry is 40% by weight to 75% by weight, and more specifically 40% by weight to 65% by weight.

On the other hand, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

In addition, the electrolyte used in the lithium secondary battery may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the fabrication of a secondary battery, but is not limited thereto.

Specifically, the electrolyte may include an organic solvent and a lithium salt.

The organic solvent can be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), methylethyl carbonate(MEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is suitable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

The lithium salt can be used without particular limitation as long as it may provide lithium ions used in a lithium secondary battery. Specifically, the anion of the lithium salt may include at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1M to 4.0M, preferably 0.5M to 3.0M, more preferably 1.0M to 2.0M. When the concentration of the lithium salt is included in the above range, the electrolyte has suitable conductivity and viscosity, thereby exhibiting excellent electrolyte performance, and lithium ions may effectively move.

In addition to the electrolyte components, to improve the life-time characteristics of a battery, suppress capacity reduction of a battery, and improve discharge capacity of a battery, the electrolyte may further contain one or more additives of, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 to 10% by weight based on a total weight of the electrolyte.

The secondary battery may follow the configuration of a typical secondary battery, except that it uses the aforementioned lithium- and manganese-rich oxide as the positive electrode active material. For example, the secondary battery may be fabricated by sequentially disposing a separator between a positive electrode containing a positive electrode active material and a negative electrode containing a negative electrode active material and sequentially stacking and drying them to form an electrode assembly, and inserting this assembly into a case, and optionally injecting an electrolyte and sealing it. The lithium secondary battery may be a cylindrical, prismatic, coin-shaped, or pouch-shaped battery.

Hereinafter, preferred examples are provided in order to assist in the understanding of the invention, however, the following examples are for illustrative purposes only, and it is obvious to those skilled in the art that various changes and modifications may be made within the category and technological ideas of the present disclosure, and such changes and modifications also fall within the scope of the attached claims.

### [Experimental Example]

### Preparation of Positive Electrode Sample and Measurement of Average Pore Area Ratio According to the Range of ECD Values

### Example 1.

The base concentration of the mixture for the synthesis of the lithium- and manganese-rich oxide precursor was maintained constantly at a pH of 11.5 to prepare the precursor, and a lithium- and manganese-rich oxide with a composition of Li_{1.130}Mn_{0.561}Ni_{0.304}Co_{0.004}O₂ was prepared by using the prepared precursor.

The lithium- and manganese-rich oxide prepared above as the positive electrode active material, Li435 (DENKA) as the conductive material, KF9700 (KUREHA) as the binder, and BM-740H (ZEON) as the dispersant were added in a weight ratio of 96.25:1.5:2.1:0.15 to NMP as the solvent to prepare a positive electrode slurry. The positive electrode slurry was coated onto an Al thin film with a thickness of 20 µm, and dried to fabricate a positive electrode.

The fabricated positive electrode was subjected to Ar ion milling (voltage: 6 kV, ion beam current: 150 µA) using an ion milling device (e.g., Hitachi IM5000) to prepare a positive electrode sample for cross-sectional analysis.

Subsequently, cross-sectional images of the positive electrode samples were captured using a SEM (JEOL, IT-800). The positive electrode active material particle region was selected from the obtained cross-sectional image. The captured cross-sectional images are shown in Figure 1, as described above.

Next, image processing was performed to obtain information about the pores. Specifically, the number of pixels within the cross section of the selected positive electrode active material particles was confirmed, and the cross-sectional area of the particle was calculated, and the equivalent circle diameter (ECD) of a circle with the same area was calculated. The number of pixels in the area corresponding to the pores in the particle cross section was confirmed and the pore area was calculated. The pore area ratio (pore area/particle cross-sectional area) was also calculated from the particle cross-sectional area and the pore area.

### Example 2.

The initial base concentration of the mixture for the synthesis of the lithium- and manganese-rich oxide precursor was adjusted to pH 11.5, and the base concentration was gradually decreased according to the synthesis time flow to prepare a precursor. Using the prepared precursor, a lithium- and manganese-rich oxide with a composition of Li_{1.130}Mn_{0.561}Ni_{0.304}Co_{0.004}O₂ was prepared.

The positive electrode was fabricated in the same manner as in Example 1, except that the lithium- and manganese-rich oxide prepared above was used as the positive electrode active material, and the ECD value and pore area ratio were calculated by the same method.

### Comparative Example 1.

The base concentration of the mixture for the synthesis of the lithium- and manganese-rich oxide precursor was maintained constantly at a pH of 12 to prepare the precursor, and a lithium- and manganese-rich oxide with a composition of Li_{1.130}Mn_{0.561}Ni_{0.304}Co_{0.004}O₂ was prepared by using the prepared precursor.

The ECD value and pore area ratio were calculated by the same method, except that the lithium- and manganese-rich oxide prepared above was used as the positive electrode active material.

Based on the ECD values and pore area ratios obtained in Examples 1, 2, and Comparative Example 1, the ECD values were divided into the following ranges: more than 2 µm and 4 µm or less, more than 6 µm and 8 µm or less, and more than 8 µm and 10 µm or less, and the average pore area ratios of the cross sections of the positive electrode active material particles corresponding to each range were calculated, and the results are shown in Table 1 below.

**[Table 1]**

| **Range of ECD value** | Average pore area ratio | | |
|---|---|---|---|
| | **Example 1** | **Comparative Example 1** | **Example 2** |
| More than 2 µm and 4 µm or less | 0.05 | 0.01 | 0.06 |
| More than 6 µm and 8 µm or less | 0.07 | 0.02 | 0.13 |
| More than 8 µm and 10 µm or less | 0.10 | 0.03 | 0.12 |

### Battery Fabrication and Performance Evaluation

Coin cells were fabricated using the positive electrode prepared in Example 1, Example 2, or Comparative Example 1, Li negative electrode, a polyethylene (PE) separator, and an electrolyte in which EC and EMC were mixed at a volume ratio of 3:7 (EC:EMC), with 1 M LiPF₆ and additives of FEC (fluoroethylene carbonate) and LiBF₄ (lithium tetrafluoroborate) added in amounts of 3 wt.% and 0.5 wt.%, respectively, based on the total weight of the electrolyte.

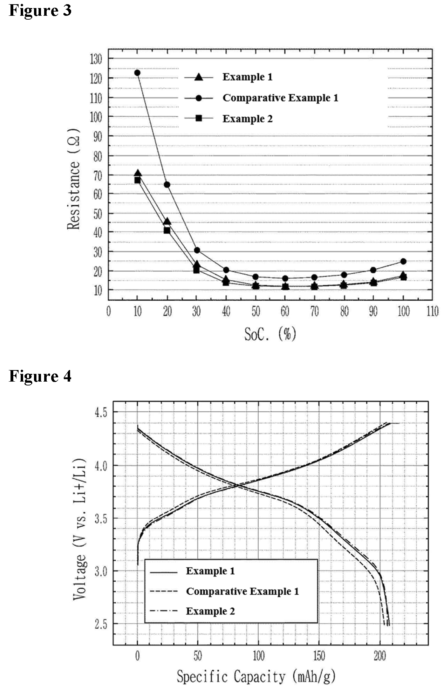

The coin cells fabricated including the positive electrodes fabricated in Example 1, Example 2, or Comparative Example 1 were activated under the conditions of 45°C, 0.1C and 2.0-4.65 V, followed by charge-discharge cycles under the conditions of 25°C, 0.33 C, and 2.5 V-4.4 V. The resistance characteristics of the lithium secondary batteries were then evaluated and shown in Figure 3, and the discharge capacity was evaluated and shown in Figure 4. In addition, the resistance values at 50% SOC and discharge capacities were measured and shown in Table 2 below.

**[Table 2]**

| | **Example 1** | **Comparative Example 1** | **Example 2** |
|---|---|---|---|
| **Discharge capacity [mAh/g]** | 207.5 | 203.9 | 206.9 |
| **SOC 50% resistance [Ω]** | 12.69 | 17.01 | 12.7 |

Referring to Tables 1 and 2, it was confirmed that the batteries of Examples 1 and 2, in which the average pore area ratio was 0.02 or more when the ECD value of the cross section of the positive electrode active material particles was more than 2 µm and 4 µm or less, exhibited superior battery capacity and resistance performance, as compare with the battery of Comparative Example 1, in which the average pore area ratio was less than 0.02 when the ECD value of the cross section of the positive electrode active material particles was more than 2 µm and 4 µm or less.

In addition, through the above experimental example, it was confirmed that the performance of a battery can be predicted by dividing the range of ECD values of the cross section of the positive electrode active material particles and analyzing the average pore area ratio of each range.

## Claims

1. A method for predicting a secondary battery performance, comprising the steps of:
a) fabricating a positive electrode comprising a positive electrode active material comprising a lithium- and manganese-rich oxide in which a manganese content is 50 mol% or more and less than 100 mol% based on the total content of metals excluding lithium;
b) milling the positive electrode to prepare a positive electrode sample;
c) photographing the cross section of the positive electrode sample by a scanning electron microscope (SEM) to acquire a cross-sectional image;
d) selecting a positive electrode active material particle region from the cross-sectional image and then measuring the average pore area ratio according to the range of ECD (equilibrium circle diameter) values of the cross section of the selected positive electrode active material particle; and
e) predicting the performance of a secondary battery comprising the positive electrode from the average pore area ratio according to the range of ECD (equilibrium circle diameter) values of the cross section of the positive electrode active material particle,
wherein the ECD (equilibrium circle diameter) represents the diameter of a circle having the same area as the cross-sectional area of the particle, and
wherein the pore area ratio represents the ratio of the pore area to the cross-sectional area of the positive electrode active material particle.

2. The method for predicting a secondary battery performance according to claim 1,
wherein the cross section of the positive electrode active material particle means a cross section obtained by cutting the positive electrode active material particle in the thickness direction.

3. The method for predicting a secondary battery performance according to claim 1,
wherein the step d) comprises measuring the average pore area ratio of particle cross sections where the ECD (equilibrium circle diameter) value of the cross section of the positive electrode active material particle is more than 2 µm and 4 µm or less, and
the average pore area ratio according to the range of ECD (equilibrium circle diameter) values of the cross section of the positive electrode active material particle is used to predict the capacity and resistance performance of a battery.

4. The method for predicting a secondary battery performance according to claim 3,
wherein when the average pore area ratio of particle cross sections where the ECD (equilibrium circle diameter) value of the cross section of the positive electrode active material particle is more than 2 µm and 4 µm or less is 0.02 or more, it is predicted to have excellent battery capacity and resistance performance.

5. The method for predicting a secondary battery performance according to claim 3,
wherein the step d) further comprises measuring the average pore area ratio of particle cross sections where the ECD (equilibrium circle diameter) value of the cross section of the positive electrode active material particle is more than 6 µm and 8 µm or less, and
when the average pore area ratio of particle cross sections where the ECD (equilibrium circle diameter) value of the cross section of the positive electrode active material particle is more than 6 µm and 8 µm or less is 0.03 or more, it is predicted to have excellent battery capacity and resistance performance.

6. The method for predicting a secondary battery performance according to claim 3,
wherein the step d) further comprises measuring the average pore area ratio of particle cross sections where the ECD (equilibrium circle diameter) value of the cross section of the positive electrode active material particle is more than 8 µm and 10 µm or less, and
when the average pore area ratio of particle cross sections where the ECD (equilibrium circle diameter) value of the cross section of the positive electrode active material particle is more than 8 µm and 10 µm or less is 0.04 or more, it is predicted to have excellent battery capacity and resistance performance.

7. The method for predicting a secondary battery performance according to claim 1,
wherein the positive electrode active material has an average particle diameter (D₅₀) of 6 µm to 10 µm.

8. A positive electrode active material comprising a lithium- and manganese-rich oxide in which a manganese content is 50 mol% or more and less than 100 mol% based on the total content of metals excluding lithium,
wherein when analyzing the cross section of the positive electrode active material, the average pore area ratio of particle cross sections with an ECD (equilibrium circle diameter) value of more than 2 µm and 4 µm or less is 0.02 or more, and
wherein the ECD (equilibrium circle diameter) represents the diameter of a circle hav ing the same area as the cross-sectional area of the particle.

9. The positive electrode active material according to claim 8,
wherein the positive electrode active material has an average particle diameter (D₅₀) of 6 µm to 10 µm.

10. The positive electrode active material according to claim 8,
wherein when analyzing the cross section of the positive electrode active material, the average pore area ratio of particle cross sections with an ECD (equilibrium circle diameter) value of more than 6 µm and 8 µm or less is 0.03 or more.

11. The positive electrode active material according to claim 8,
wherein when analyzing the cross section of the positive electrode active material, the average pore area ratio of particle cross sections with an ECD (equilibrium circle diameter) value of more than 8 µm and 10 µm or less is 0.04 or more.

12. A positive electrode comprising the positive electrode active material as set forth in any one of claims 8 to 11.

13. A secondary battery comprising the positive electrode as set forth in claim 12.
